# EUROPEAN PATENT APPLICATION

(11) **EP 4 383 830 A1**
(43) Date of publication of application: **12.06.2024**
(21) Application number: 21952166.3
(22) Date of filing: 02.08.2021
(51) Int. Cl.: H04W 52/02, H04W 68/00

(54) **PAGING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Gunzelmann, Rainer
(86) International application number: PCT/CN2021/110147
(87) International publication number: WO 2023/010256

(57) **Abstract**

Embodiments of the present invention relate to a paging method and apparatus, a communication device, and a storage medium. An access network device sends a first type of paging message for a user equipment (UE) group, wherein the UE group comprises at least one UE.

## Description

### FIELD

The present disclosure relates to, but is not limited to the field of wireless communication technologies, and more particularly to a paging method, a paging apparatus, a communication device, and a storage medium.

### BACKGROUND

Under a discontinuous reception (DRX) mechanism, a user equipment (UE) such as a mobile terminal will stop monitoring a paging message at a paging occasion (PO) according to rules of DRX, thus achieving a purpose of power saving.

The UE monitors a paging channel for paging initiated by a core network (CN) when in a radio resource control (RRC) idle state. The UE also monitors a paging channel for paging initiated by a radio access network (RAN) when in a RRC inactive state. The UE does not need to continuously monitor the paging channel. The UE in the RRC idle state or the UE in the RRC inactive state merely needs to monitor the paging channel during one paging occasion (PO) in each DRX cycle. The PO monitored by the UE is calculated and determined based on a UE identifier through a formula.

### SUMMARY

In view of this, embodiments of the present disclosure provide a paging method, a paging apparatus, a communication device, and a storage medium.

A first aspect of embodiments of the present disclosure provides a paging method. The method is performed by a network device and includes sending a first type of paging message for a user equipment (UE) group. The UE group includes at least one UE.

A second aspect of embodiments of the present disclosure provides a paging method. The method is performed by a user equipment (UE) and includes receiving a first type of paging message for a UE group to which the UE belongs. The UE group includes at least one UE.

A third aspect of embodiments of the present disclosure provides a paging apparatus. The apparatus includes a first sending module configured to send a first type of paging message for a user equipment (UE) group. The UE group includes at least one UE.

A fourth aspect of embodiments of the present disclosure provides a paging apparatus. The apparatus includes a second receiving module configured to receive a first type of paging message for a user equipment (UE) group to which a UE belongs. The UE group includes at least one UE.

A fifth aspect of embodiments of the present disclosure provides a communication device. The communication device includes a processor, a memory, and an executable program stored in the memory and capable of being run by the processor. The processor is configured to execute steps of the paging method described in the first aspect or the second aspect when running the executable program.

A sixth aspect of embodiments of the present disclosure provides a storage medium. The storage medium has stored therein executable programs that, when executed by a processor, cause steps of the paging method described in the first aspect or the second aspect to be implemented.

According to the paging method, the paging apparatus, the communication device, and the storage medium provided in the embodiments of the present disclosure, the network device sends the first type of paging message for the user equipment (UE) group. The UE group includes at least one UE. In this way, a base station sends the first type of paging message for the UE group, and UEs in a same UE group may respond based on a same first type of paging message. On the one hand, the efficiency of paging the UE by the base station is improved, and on the other hand, it is realized that multiple UEs may respond to the paging message at the same time, so as to meet needs of communication services that require simultaneous wake-up, such as data coordination.

It is to be understood that both the foregoing general description and the following detailed description are illustrative and explanatory merely and are not restrictive of the embodiments of the present disclosure.

### BRIEF DESCRIPTION OF THE DRAWINGS

The accompanying drawings herein, which are incorporated in and constitute a part of this specification, illustrate embodiments consistent with the present disclosure and, together with the description, serve to explain the principles of embodiments of the present disclosure.
FIG. 1 is a schematic diagram showing a wireless communication system according to an illustrative embodiment.
FIG. 2a is a flow chart showing a paging method according to an illustrative embodiment.
FIG. 2b is a flow chart showing a paging method according to an illustrative embodiment.
FIG. 2c is a flow chart showing a paging method according to an illustrative embodiment.
FIG. 2d is a flow chart showing a paging method according to an illustrative embodiment.
FIG. 2e is a flow chart showing a paging method according to an illustrative embodiment.
FIG. 2f is a flow chart showing a paging method according to an illustrative embodiment.
FIG. 3a is a flow chart showing a paging method according to an illustrative embodiment.
FIG. 3b is a flow chart showing a paging method according to an illustrative embodiment.
FIG. 3c is a flow chart showing a paging method according to an illustrative embodiment.
FIG. 3d is a flow chart showing a paging method according to an illustrative embodiment.
FIG. 3e is a flow chart showing a paging method according to an illustrative embodiment.
FIG. 3f is a flow chart showing a paging method according to an illustrative embodiment.
FIG. 3g is a flow chart showing a paging method according to an illustrative embodiment.
FIG. 4 is a block diagram showing a paging apparatus according to an illustrative embodiment.
FIG. 5 is a block diagram showing another paging apparatus according to an illustrative embodiment.
FIG. 6 is a block diagram showing a device for paging according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to the disclosure as recited in the appended claims.

Terms used herein in embodiments of the present disclosure are merely for the purpose of describing specific embodiments, but should not be construed to limit the present disclosure. As used in the embodiments of the present disclosure and the appended claims, "a/an," "said," and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present disclosure for describing various information, these information should not be limited by these terms. These terms are merely used for distinguishing information of the same type from each other. For example, first information may also be referred to as second information, and similarly, the second information may also be referred to as the first information, without departing from the scope of embodiments of the present disclosure. As used herein, the term "if" may be construed to mean "when" or "upon" or "in response to determining" depending on the context.

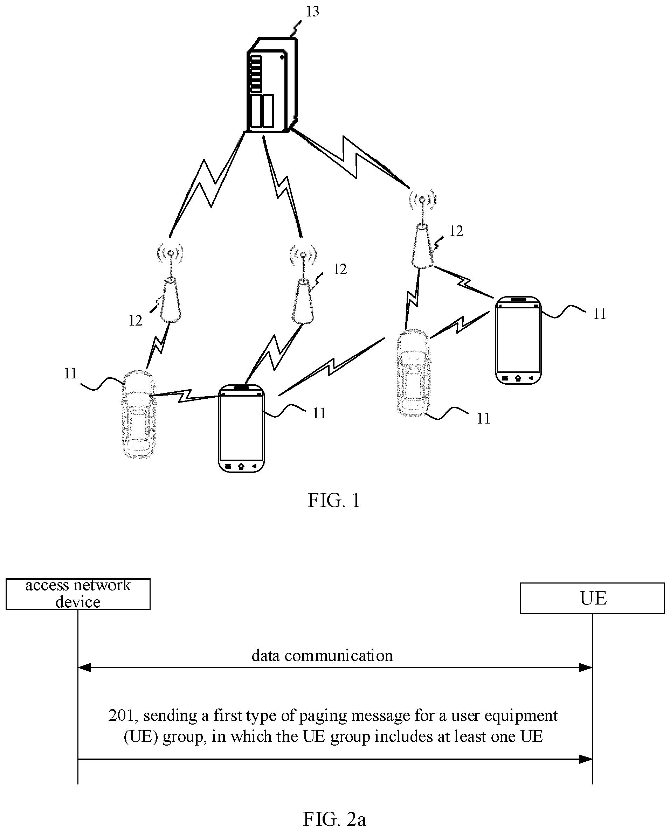

Referring to FIG. 1, FIG. 1 is a schematic diagram showing a wireless communication system provided in an embodiment of the present disclosure. As shown in FIG. 1, the wireless communication system is a communication system based on a cellular mobile communication technology, and may include several terminals 11 and several base stations 12.

The terminal 11 may be a device that provides voice and/or data connectivity to a user. The terminal 11 may communicate with one or more core networks via a radio access network (RAN). The terminal 11 may be an Internet of Things terminal, such as a sensor device, a mobile phone (or referred to as a "cellular" phone) and a computer with an Internet of Things terminal. For example, it may be a fixed, portable, pocket-sized, handheld, built-in computer or vehicle-mounted apparatus. For example, a station (STA), a subscriber unit, a subscriber station, a mobile station, a mobile, a remote station, an access point, a remote terminal, an access terminal, a user terminal, a user agent, a user device, or a user equipment (UE). Alternatively, the terminal 11 may be a device of an unmanned aerial vehicle. Alternatively, the terminal 11 may be a vehicle-mounted device, for example, a driving computer with a wireless communication function, or a wireless communication device externally connected with a driving computer. Alternatively, the terminal 11 may be a roadside device, such as a street lamp, a signal lamp or other roadside devices with a wireless communication function.

The base station 12 may be a network side device in the wireless communication system. The wireless communication system may be a 4th generation mobile communication (4G) system, also referred to as a long term evolution (LTE) system. Alternatively, the wireless communication system may be a 5G system, also referred to as a new radio (NR) system or a 5G NR system. Alternatively, the wireless communication system may be a next generation system of the 5G system. The access network in the 5G system may be referred to as a new generation-radio access network (NG-RAN), or a MTC system.

The base station 12 may be an evolved base station (eNB) used in the 4G system. Alternatively, the base station 12 may be a centralized distributed architecture base station (gNB) used in the 5G system. When the base station 12 adopts the centralized distributed architecture, it usually includes a central unit (CU) and at least two distributed units (DUs). A protocol stack of a packet data convergence protocol (PDCP) layer, a radio link control (RLC) layer and a media access control (MAC) layer is provided in the central unit. A protocol stack of a physical (PHY) layer is provided in the distributed unit. The specific implementation of the base station 12 is not limited in the embodiments of the present disclosure.

A wireless connection may be established between the base station 12 and the terminal 11 through a wireless radio. In different embodiments, the wireless radio is a wireless radio based on the 4th generation mobile communication network technology (4G) standard. Alternatively, the wireless radio is a wireless radio based on the 5th generation mobile communication network technology (5G) standard. For example, the wireless radio is a new radio. Alternatively, the wireless radio may also be a wireless radio based on the next generation mobile communication network technology standard of the 5G.

In some embodiments, an end to end (E2E) connection may also be established between the terminals 11, for example, a vehicle to vehicle (V2V) communication, a vehicle to infrastructure (V2I) communication and a vehicle to pedestrian (V2P) communication in a vehicle to everything (V2X) communication.

In some embodiments, the wireless communication system may further include a network management device 13.

Several base station 12 are connected to the network management device 13, respectively. The network management device 13 may be a core network device in the wireless communication system, for example, the network management device 13 may be a mobility management entity (MME) in an evolved packet core (EPC). Alternatively, the network management device may be other core network devices, such as a serving gateway (SGW), a public data network gateway (PGW), a policy and charging rules function (PCRF) or a home subscriber server (HSS). The implementation form of the network management device 13 is not limited in the embodiment of the present disclosure.

Executors involved in embodiments of the present disclosed include, but are not limited to, a UE such as a mobile terminal supporting a cellular mobile communication, and a network device such as a base station and/or a core network.

An application scenario of the embodiments of the present disclosure is that multiple sources or forms of information are involved in a multimodality. For example, people have senses of touch, hearing, sight and smell, and media of information include voice, video and text, etc. In order to perceive user's input from multiple dimensions, there are many types and numbers of applications and/or devices used for multimodal information collection, including multiple cameras, speakers, sensors, keyboards, and fingerprint collectors, etc. These devices for collecting multiple modal information may be used in a same device or across devices.

On a server end, data fusion of multimodal data sets is also referred to as information fusion, i.e., integrating and data analysis and processing incomplete information about a certain environmental feature provided by multiple sensors or information sources, so as to form a relatively complete and consistent perceptual description, thus realizing a more accurate identifier and a determination function.

After the server completes the data fusion and makes a decision, multimodal output is obtained. This process is a service distribution process. Often a service is not distributed to a single device, but is likely to be a linkage of several related devices. For example, determining owner's return through voiceprint and video may trigger a curtain to be drawn and an air conditioner to be turned on at the same time. This also involves a problem that multiple output devices need to cooperate in groups.

Multiple trigger devices may be different UEs. Therefore, due to their different UE identifiers, when paging occasions (POs) are at different moments, it is impossible to wake up these coordinated devices at the same time. Therefore, how to realize paging group coordination in a multimodal scenario, that is, multiple different types of UEs wake up at the same time, is an urgent problem to be solved.

As shown in FIG. 2a, an illustrative embodiment of the present disclosure provides a paging method. The method may be performed by a network device of a cellular mobile communication system, etc., and includes a step as follows.

In step 201, a first type of paging message for a user equipment (UE) group is sent. The UE group includes at least one UE.

The UE may be a mobile terminal or the like that uses a cellular mobile communication technology for a wireless communication. The network device may be an access network device such as a base station of a cellular mobile communication system and/or a core network. The core network may send information to the UE via the base station.

The UE group may be one or more UEs divided by a network side device such as a core network based on needs such as data coordination.

UEs in a same UE group may be UEs required to respond to paging within a same period. For example, the UEs in the same UE group may be UEs required to be paged within a same period. For example, the UEs in the same UE group are UEs that are required to be paged and woken up at the same time.

Here, the paging message may be paging DCI. The paging DCI may include scheduling information and short messages of a paging content, and the UE may receive the paging content based on the scheduling information. The paging DCI may be transmitted by using a PDCCH resource. The first type of paging message may be a paging message sent to all UEs in the UE group. All the UEs in the same UE group may monitor the first type of paging message at a same monitoring occasion. In this way, the UEs in the same UE group may be paged by a same paging message and respond based on the same paging message, e.g. wake up at the same time, etc. Thus, it may meet needs of multimodal data fusion scenarios.

Different UE groups may be UE groups divided based on different needs such as data collaboration, etc. Paging configurations of first types of paging messages for different UE groups may be different. Here, the paging configurations may include a transmission resource, and/or have different coding modes, and/or have different group paging identifiers, etc.

The first types of paging messages for the different UE groups are different, which may include that the paging configurations of the first types of paging messages for the different UE groups may be different. UEs in the different UE groups may receive first types of paging messages for their respective UE groups. Paging configurations of different first types of paging messages may be sent by the base station to the UE, and/or stipulated by a communication protocol, etc.

The UE may determine a first type of paging message to be received according to the group paging identifier, and monitor and receive the first type of paging message at a monitoring occasion of the first type of paging message based on the paging configuration of the first type of paging message.

In this way, the base station sends the first type of paging message for the UE group, and the UEs in the same UE group may respond based on a same first type of paging message. On the one hand, the efficiency of paging the UE by the base station is improved, and on the other hand, it is realized that multiple UEs may respond to the paging message at the same time, so as to meet needs of communication services that require simultaneous wake-up, such as data coordination.

In an embodiment, the UE included in the UE group is a multimodality UE.

Information received by UEs of different modalities differs in source and/or form. The UEs in the same UE group may be different data sources in a data fusion process of a multimodal data set. The UEs in the same UE group are usually required to coordinate data, such as uploading data at the same time. For example, the UEs in the same UE group may be multiple UEs that upload audio data, video data and environmental sensing data respectively in the data fusion process. In the data fusion process, it is usually desirable to acquire the audio data, the video data and the environmental sensing data at the same time.

The multimodal UE includes a multimodal input UE and/or a multimodal output UE.

In an embodiment, the first type of paging message includes a first type of paging message for a UE in an idle state, and/or a first type of paging message for a UE in an inactive state.

The UEs in the same UE group may be in a same radio resource control (RRC) state, or may be in different RRC states. For example, the UEs in the same UE group may all be in a RRC idle state or a RRC inactive state. In the same UE group, part of the UEs may be in a RRC idle state, and another part of the UEs may be in a RRC inactive state, etc.

In an embodiment, the first type of paging message for the UE group includes a first type of paging message for a group paging identifier of the UE group.

Different UE groups may be identified by different group paging identifiers. A UE may be configured with a group paging identifier of a UE group to which the UE belongs. In this way, different group paging identifiers correspond to the different first types of paging messages.

Illustratively, the core network, or the base station, or the like may divide the UE group according to needs such as data coordination, and send a corresponding group paging identifier to the UE. The group paging identifier may also be stipulated by the communication protocol, etc.

The network device send the first type of paging message for the UE group. That is, the first type of paging message is sent for the group paging identifier.

In an embodiment, the UE group is determined according to a service of the UE, and/or the UE group is determined according to a geographic location of the UE.

Here, the UE groups may be divided according to services. Here, the UEs in the same UE group may process a same service, such as a same service requiring data collaboration.

Illustratively, in a certain data collaboration service, data collected by three different UEs needs to be coordinated, for example, video data, audio data and temperature sensing data, respectively. Here, the three UEs may be divided into a same UE group. In this way, when the network device uses the first type of paging message for paging, responses of the three UEs may be kept consistent to realize data collaboration.

Services of the UEs in the same UE group may also be multiple services requiring data coordination.

In an embodiment, the UEs may be grouped by the core network based on the services. Since the core network may directly acquire the services of the UEs, grouping the UEs by the core network based on the services may improve the grouping efficiency.

The UE group may be divided according to the geographic location.

Here, the UE group may be divided according to a geographic location type of the UE. Here, geographic locations of the UEs in the same UE group may be the same or different. The geographic locations of the UEs in the same UE group may be selected according to needs of a data collaboration task.

Illustratively, in a certain data collaboration task, service data collected by n different UEs needs to be coordinated, so as to obtain service data statistics in a larger range. In this way, it is preferable that the *n* UEs are evenly distributed in the range. Therefore, the *n* UEs evenly distributed in the range may be selected to form a UE group. In this way, when the network device uses the first type of paging message for paging, responses of the n UEs may be kept consistent, and data collaboration may be realized.

In an embodiment, the UEs may be grouped by the base station based on their geographic locations. Since the base station may directly acquire the geographic location of the UE, grouping the UEs by the base station based on the geographic location of the UE may improve the grouping efficiency.

In an embodiment, paging configurations of first types of paging messages for different UE groups are different.

The paging configuration may include a transmission resource, and/or a paging coding mode, and/or a group paging identifier, etc.

The UEs in the different UE groups receive their respective first types of paging messages by using paging configurations corresponding to their respective UE groups, thus reducing a situation that the UEs mistakenly receive first types of paging messages for other UE groups due to same paging configurations of the first types of paging message for the different UE groups, and further reducing a situation of being paged by mistake.

In an embodiment, monitoring occasions of the first types of paging messages for the different UE groups are different, and/or paging radio network temporary identifiers (P-PRNTIs) of the first types of paging messages for the different UE groups are different, and/or control resource sets (CORESETs) of the first types of paging messages for the different UE groups are different, and/or search spaces of the first types of paging messages for the different UE groups are different, and/or group paging identifiers carried in the first types of paging messages for the different UE groups are different.

The paging configuration may include the monitoring occasion, the P-PRNTI, the CORESET, the search space and/or the group paging identifier, etc.

The paging configurations of the first types of paging messages for the different UE groups are different, that is, paging configurations of first types of paging messages corresponding to different group paging identifiers are different. The UE may determine the first type of paging message that needs to be monitored and received according to the group paging identifier of the UE group to which the UE belongs.

Illustratively, the UE may monitor based on the monitoring occasion of the first type of paging message corresponding to the group paging identifier of the UE group to which the UE belongs.

The network may configure a monitoring occasion bound to the group paging identifier, and the first type of paging message does not need to carry identifier information associated with a corresponding UE group. The UE may merely need to monitor at a monitoring occasion corresponding to the UE group to which the UE belongs.

The first type of paging message may be scrambled by using the P-PRNTI. When the UE receives the paging message, in case that a blind detection of the first type of paging message scrambled by the P-RNTI succeeds, it may determine that the first type of paging message is sent to itself.

The network may configure a P-RNTI bound to the UE group, that is, the group paging identifier. The UE in the same UE group may perform a blind detection based on a P-RNTI corresponding to the UE group to which the UE belongs, so that the first type of paging message for the UE group to which the UE belongs may be received. That is, the UE may merely monitor the first type of paging message corresponding to the P-RNTI bound to its own UE group.

The CORESET is a set of transmission resources configured to transmit the first type of paging message, including a frequency domain resource and/or a time domain resource. The different first types of paging messages may use different CORESETs.

The network may configure a CORESET bound to the group paging identifier, and the UE monitors the first type of paging message based on the CORESET provided by the network. In this way, the first type of paging message does not need to carry the identifier information related to the UE group, and the UE merely needs to monitor in a CORESET corresponding to its own UE group.

The search space may define a starting position for blindly detecting the first type of paging message and a channel search mode, and the different first types of paging messages may have different search spaces.

The network may configure a search space bound to the group paging identifier, and the UE monitors the first type of paging message based on the search space provided by the network. In this way, the first type of paging message does not need to carry the identifier information related to the UE group, and the UE merely needs to monitor in a search space corresponding to its own UE group.

The network may also set the group paging identifier of the UE group in the first type of paging message for the UE group. In this way, the UE may determine whether a received first type of paging message is sent to itself according to the group paging identifier in the first type of paging message.

In an embodiment, the network selects one or more items from the above-mentioned monitoring occasion, the monitoring occasion, the P-PRNTI, the CORESET, the search space, and the group paging identifier to distinguish the different first types of paging messages. For example, the network may configure the different first types of paging messages, and the monitoring occasion, the monitoring occasion, the P-PRNTI, the CORESET, the search space, and the group paging identifier are all different.

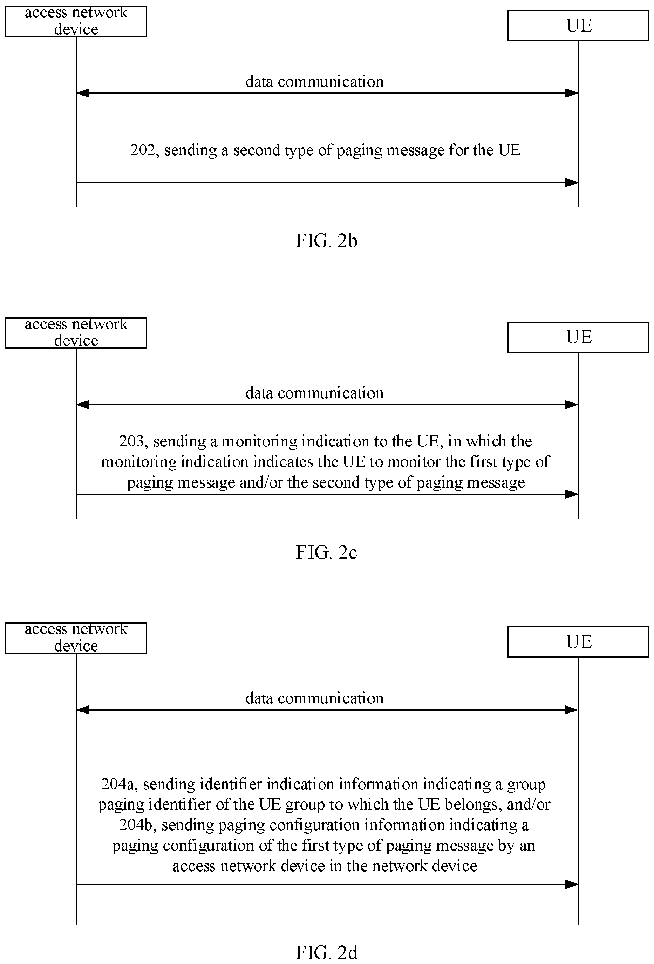

In some embodiments, as shown in FIG. 2b, a paging method provided in an embodiment of the present disclosure includes a step as follows.

In step 202, a second type of paging message for the UE is sent.

Sending the second type of paging message may be implemented alone, or may be implemented in combination with step 201.

In addition to sending the first type of paging message, the network device may also send the second type of paging message for paging a single UE.

The first type of paging message may be configured to page the UE group, and the second type of paging message may be configured to page a single UE.

In this way, the base station may send two types of paging messages, and the UE may receive the two types of paging messages, thus improving the compatibility of transmitting paging messages between the base station and the UE.

In an embodiment, a paging configuration of the first type of paging message is different from a paging configuration of the second type of paging message.

The first type of paging message and the second type of paging message may have different paging configurations. Here, the paging configuration may include a transmission resource and/or have different coding modes and the like.

Illustratively, compared with the second type of paging message, the first type of paging message may carry an explicit indication for indicating that the first type of paging message is configured to page the UE group. For example, the first type of paging message may indicate that the first type of paging message is configured to page the UE group via one bit.

Based on the group paging identifier provided by the network, the UE may also monitor the second type of paging message, while monitoring the first type of paging message at a paging occasion (PO) corresponding to the group paging identifier.

Illustratively, the UE may continue to monitor the second type of paging message outside the monitoring occasion of the first type of paging message. In case that the monitoring occasion of the first type of paging message overlaps with the monitoring occasion of the second type of paging message, the UE may simultaneously decode the two types of paging messages.

For example, in a certain data collaboration task, data collected by three different UEs needs to be coordinated. Here, the three UEs may be divided into a same UE group. In this way, when the network device uses the first type of paging message for paging, responses of the three UEs may be kept consistent. The network device may also use the second type of paging message to page one or more of the three UEs, so as to maintain the normal development of other communication services other than the data collaboration task.

In this way, the base station may send the two types of paging messages, and the UE may receive the two types of paging messages, thus improving the compatibility of transmitting paging messages between the base station and the UE.

In an embodiment, a monitoring occasion of the first type of paging message is different from a monitoring occasion of the second type of paging message, and/or a P-PRNTI of the first type of paging message is different from a P-PRNTI of the second type of paging message, and/or a CORESET of the first type of paging message is different from a CORESET of the second type of paging message, and/or a search space of the first type of paging message is different from a search space of the second type of paging message.

The first type of paging message and the second type of paging message may have different paging configurations. Here, the paging configuration may include a transmission resource and/or have different coding modes and the like.

Illustratively, the monitoring occasion of the first type of paging message is different from the monitoring occasion of the second type of paging message. The network device may respectively send the first type of paging message and the second type of paging message at different monitoring occasions, and the UE may respectively receive the first type of paging message and the second type of paging message at different monitoring occasions. In this way, the complexity of receiving paging messages caused by overlapping monitoring occasions of the two types of paging messages is reduced.

The network device may use different P-PRNTIs to scramble the first type of paging message and the second type paging message. When receiving the paging message, the UE may blindly detect paging messages by using the P-PRNTI corresponding to the first type of paging message and the second type of paging message, respectively, and then receive the first type of paging message or the second type of paging message sent to itself.

The network device may use different CORESETs to transmit the first type of paging message and the second type of paging message. When receiving a paging message, the UE may receive the paging message by using the CORESET corresponding to the first type of paging message and the second type of paging message, respectively, and then receive the first type of paging message or the second type of paging message sent to itself.

The network device may use different search spaces to transmit the first type of paging message and the second type of paging message. When receiving the paging message, the UE may use the search space corresponding to the first type of paging message and the second type of paging message respectively to perform monitoring, and then receive the first type of paging message or the second type of paging message sent to itself.

In an embodiment, the network selects one or more items from the above-mentioned monitoring occasion, the monitoring occasion, the P-PRNTI, the CORESET, the search space, and the group paging identifier to distinguish between different first types of paging messages and second types of paging messages. For example, the network may configure the first type of paging message and the second type of paging message, and the monitoring occasion, the monitoring occasion, the P-PRNTI, the CORESET, and the search space of the first type of paging message are different from those of the second type of paging message.

In some embodiments, as shown in FIG. 2c, a paging method provided in an embodiment of the present disclosure includes a step as follows.

In step 203, a monitoring indication is sent to the UE. The monitoring indication indicates the UE to monitor the first type of paging message and/or the second type of paging message.

Sending the monitoring indication may be implemented alone, or may be implemented in combination with step 201 and/or step 202.

The UE may monitor the first type of paging message and/or the second type of paging message based on an indication of a network monitoring indication or a stipulation of a communication protocol.

Illustratively, the UE may monitor the first type of paging message and/or the second type of paging message at the same time based on the indication of the network monitoring indication or the stipulation of the communication protocol.

The UE may merely monitor the first type of paging message or the second type of paging message based on the indication of the network monitoring indication or the stipulation of the communication protocol.

In an embodiment, the base station may send the monitoring indication carrying in a broadcast message such as a system message to the UE. For example, the monitoring indication may be carried in the broadcast message such as the system message, and sent it to the UE, indicating the UE to notify monitoring of the first type of paging message.

In some embodiments, as shown in FIG. 2d, a paging method provided in an embodiment of the present disclosure includes steps as follows.

In step 204a, identifier indication information indicating a group paging identifier of the UE group to which the UE belongs is sent, and/or in step 204b, paging configuration information indicating a paging configuration of the first type of paging message is sent by an access network device in the network device.

Step 204a and/or step 204b may be implemented alone, or may be implemented in combination with step 201, step 202 and/or step 203.

Here, the UEs may be grouped by the core network or the access network device. The access network device determines the paging configuration information of the first type of paging message for each UE group. The paging configuration information is configured to indicate the paging configuration of the first type of paging message, such as a transmission resource, and/or having different coding modes, and/or having different group paging identifiers.

The core network or the access network device may send the indication information of the group paging identifier of the UE group indicated by the UE to the UE. In this way, the UE may determine the group paging identifier according to the indication information of the group paging identifier, and then determine the UE group to which the UE belongs according to the group paging identifier.

The access network device may send the paging configuration information to the UE. The paging configuration information may indicate the paging configuration of the first type of paging message for the UE group to which the UE belongs, and may also indicate the paging configurations of the first types of paging messages of all UE groups. In this way, the UE may receive the first type of paging message according to the group paging identifier and the paging configuration.

The identifier indication information and the paging configuration information provided by the network may be sent to the UE via a public signaling or a dedicated signaling.

In an embodiment, in response to the UE receiving the identifier indication information indicating the group paging identifier, at least the first type of paging message is received.

In case that the network device allocates the group paging identifier to the UE, it means that the UE needs to monitor at least the first type of paging message.

In an embodiment, sending the identifier indication information indicating the group paging identifier of the UE group to which the UE belongs includes at least one of sending access stratum (AS) information carrying the identifier indication information, or sending non-access stratum (NAS) information carrying the identifier indication information. Sending the paging configuration information indicating the paging configuration of the first type of paging message by the access network device in the network device includes sending AS information carrying the paging configuration information by the access network device.

In case that the identifier indication information and/or the paging configuration information is determined by a device at a radio access stratum, it may be directly sent to the UE by a device such as a RNC or a base station via the AS information.

In case that the identifier indication information is determined by the core network device, it may be directly sent to the UE by the core network device via the NAS information. In this way, access of a device at an access stratum is reduced, and communication efficiency is improved. The core network may determine the identifier indication information, and the base station forwards the identifier indication information to the UE.

In an embodiment, the AS information includes a system message, and a radio resource control (RRC) signaling.

In an embodiment, the base station sends the system message carrying the identifier indication information and/or the paging configuration information, and the UE parses the identifier indication information and/or the paging configuration information from the system message.

Alternatively, the base station sends the RRC signaling carrying the identifier indication information and/or the paging configuration information, and the UE parses the identifier indication information and/or the paging configuration information from the RRC signaling. Since the UE receives the RRC signaling when it is in a RRC connected state, the identifier indication information and the paging configuration information may respectively indicate a group paging identifier and a paging configuration of the UE in a RRC disconnected state. Here, the RRC disconnected state includes a RRC idle state and/or a RRC inactive state.

Illustratively, the access network device such as the base station may send the AS information carrying the identifier indication information and/or the paging configuration information. It indicates the group paging identifier of the UE group to which the UE belongs, and the paging configuration of the first type of paging message. Here, the AS information may be the RRC signaling, such as a RRC release signaling. After receiving the identifier indication information and/or the paging configuration information, the UE monitors the first type of paging message based on an allocated group paging identifier and the paging configuration of the first type of paging message.

In an embodiment, the NAS information includes downlink information in a UE attachment process.

Here, the core network and the like may carry the identifier indication information and/or the paging configuration information in the downlink information in the UE attachment process. A non-access stratum (NAS) of the UE may notify an access stratum (AS) of the identifier indication information and/or the paging configuration information through an inter-layer message, and then the first type of paging message is monitored.

Illustratively, the core network may send the identifier indication information, that is, the core network notifies the UE of its group paging identifier in an attach message.

In an embodiment, the paging message issued by the core network to the base station carries the paging identifier of the UE group.

In an embodiment, the paging message issued by the core network to the base station carries the indication information of the group paging identifier, indicating that this is a group paging.

In an embodiment, the base station decides that this is a group paging, and sends the first type of paging message in the paging configuration of the group paging identifier.

In an embodiment, in case that the UE is in an idle state, an upper stratum will be notified after receiving the first type of paging message.

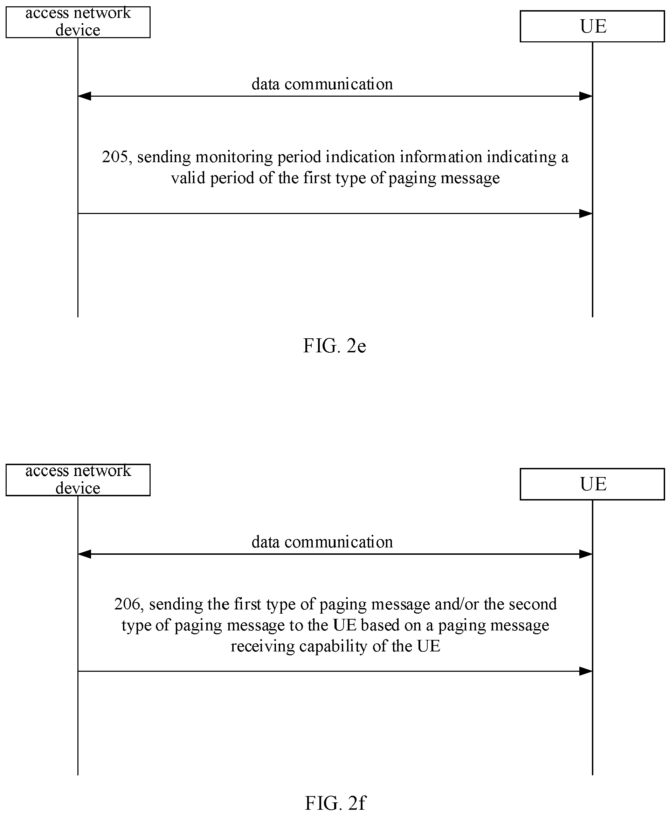

In some embodiments, as shown in FIG. 2e, a paging method provided in an embodiment of the present disclosure includes a step as follows.

In step 205, monitoring period indication information indicating a valid period of the first type of paging message is sent.

Step 205 may be implemented alone, or may be implemented in combination with step 201, step 202, step 203, step 204a and/or step 204b.

A network side may notify the UE that it may monitor and receive the first type of paging message within the valid period. Outside the valid period, the UE may not monitor the first type of paging message, and merely monitor the second type of paging message.

In an embodiment, the UE may monitor and receive the first type of paging message and the second type of paging message within the valid period.

In an embodiment, in case that the UE is in an idle state, an upper stratum will be notified after receiving the first type of paging message.

In some embodiments, as shown in FIG. 2f, a paging method provided in an embodiment of the present disclosure includes a step as follows.

In step 206, the first type of paging message and/or the second type of paging message are/is sent to the UE based on a paging message receiving capability of the UE.

Step 206 may be implemented alone, or may be implemented in combination with step 201, step 202, step 203, step 204a, step 204b and/or step 205.

Illustratively, in case that the UE has a capability to monitor and receive the first type of paging message and the second type of paging message at the same time, the network device may send the first type of paging message and the second type of paging message, or may merely send one of the first type of paging message and the second type of paging message.

In case that the UE merely has a capability to monitor and receive one of the first type of paging message and second type of paging message at the same time, the network device may merely send one of the first type of paging message and second type of paging message.

Here, the capability of the UE to monitor and receive the first type of paging message may be a capability of monitoring and receiving group PDCCH DCI. The capability of the UE to monitor and receive the second type of paging message may be a capability to receive other PDCCH DCI.

In an embodiment, the method further includes receiving capability indication information sent by the UE. The capability indication information indicates the paging message receiving capability of the UE.

The UE may indicate a capability of the UE to receive the paging message to the network side.

Illustratively, the UE may indicate the capability of the UE to receive the paging message by sending the capability indication information to the network device.

For example, the UE may carry a UE capability indication information in the capability information and report it to the base station. This information may be forwarded by the base station to the core network. For example, the information may be forwarded to the core network by the base station when releasing the UE.

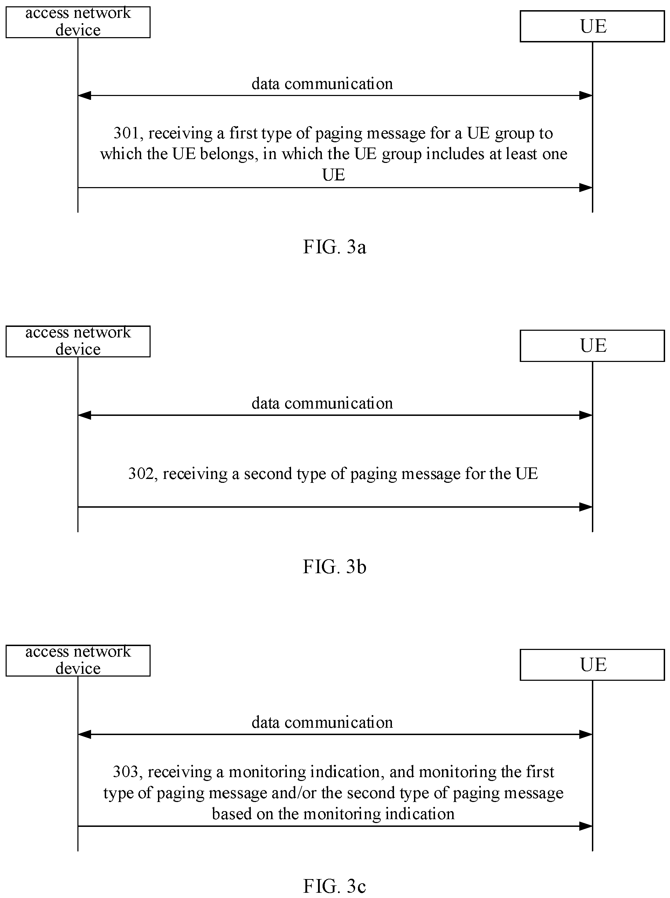

As shown in FIG. 3a, an illustrative embodiment of the present disclosure provides a paging method. The paging method may be performed by a user equipment (UE) of a cellular mobile communication system, etc., and includes a step as follows.

In step 301, a first type of paging message for a UE group to which the UE belongs is received. The UE group includes at least one UE.

The UE may be a mobile terminal or the like that uses a cellular mobile communication technology for a wireless communication. The network device may be a base station of a cellular mobile communication system, or the like.

The UE group may be one or more UEs divided by a network side device such as a core network based on needs such as data coordination.

UEs in a same UE group may be UEs required to respond to paging within a same period. For example, the UEs in the same UE group may be UEs required to be paged within a same period. For example, the UEs in the same UE group are UEs that are required to be paged and woken up at the same time.

Here, the paging message may be paging DCI. The paging DCI may include scheduling information and short messages of a paging content, and the UE may receive the paging content based on the scheduling information. The paging DCI may be transmitted by using a PDCCH resource. The first type of paging message may be a paging message sent to all UEs in the UE group. All the UEs in the same UE group may monitor the first type of paging message at a same monitoring occasion. In this way, the UEs in the same UE group may be paged by a same paging message and respond based on the same paging message, e.g. wake up at the same time, etc. Thus, it may meet needs of multimodal data fusion scenarios.

Different UE groups may be UE groups divided based on different needs such as data collaboration, etc. Paging configurations of first types of paging messages for different UE groups may be different. Here, the paging configurations may include a transmission resource, and/or have different coding modes, and/or have different group paging identifiers, etc.

The first types of paging messages for the different UE groups are different, which may include that the paging configurations of the first types of paging messages for the different UE groups may be different. UEs in the different UE groups may receive first types of paging messages for their respective UE groups. Paging configurations of different first types of paging messages may be sent by the base station to the UE, and/or stipulated by a communication protocol, etc.

The UE may determine a first type of paging message to be received according to the group paging identifier, and monitor and receive the first type of paging message at a monitoring occasion of the first type of paging message based on the paging configuration of the first type of paging message.

In this way, the base station sends the first type of paging message for the UE group, and the UEs in the same UE group may respond, such as waking up, based on a same first type of paging message. On the one hand, the efficiency of paging the UE by the base station is improved, and on the other hand, it is realized that multiple UEs may respond to the paging message at the same time, so as to meet needs of communication services that require simultaneous wake-up, such as data coordination.

In an embodiment, the UE is a multimodality UE.

Information received by UEs of different modalities differs in source and/or form. The UEs in the same UE group may be different data sources in a data fusion process of a multimodal data set. The UEs in the same UE group are usually required to coordinate data, such as uploading data at the same time. For example, the UEs in the same UE group may be multiple UEs that upload audio data, video data and environmental sensing data respectively in the data fusion process. In the data fusion process, it is usually desirable to acquire the audio data, the video data and the environmental sensing data at the same time.

The multimodal UE includes a multimodal input UE and/or a multimodal output UE.

In an embodiment, the UE is in an idle state or an active state.

The UEs in the same UE group may be in a same radio resource control (RRC) state, or may be in different RRC states. For example, the UEs in the same UE group may all be in a RRC idle state or a RRC inactive state. In the same UE group, part of the UEs may be in a RRC idle state, and another part of the UEs may be in a RRC inactive state, etc.

In an embodiment, receiving the first type of paging message for the UE group to which the UE belongs includes receiving the first type of paging message for a group paging identifier of the UE group.

Different UE groups may be identified by different group paging identifiers. A UE may be configured with a group paging identifier of the UE group to which the UE belongs. In this way, different group paging identifiers correspond to the different first types of paging messages.

Illustratively, the core network, or the base station, or the like may divide the UE group according to needs such as data coordination, and send a corresponding group paging identifier to the UE. The group paging identifier may also be stipulated by the communication protocol, etc.

The network device send the first type of paging message for the UE group. That is, the first type of paging message is sent for the group paging identifier.

In an embodiment, the UE group is determined according to a service of the UE, and/or the UE group is determined according to a geographic location of the UE.

Here, the UE groups may be divided according to services. Here, the UEs in the same UE group may process a same service, such as a same service requiring data collaboration.

Illustratively, in a certain data collaboration service, data collected by three different UEs needs to be coordinated, for example, video data, audio data and temperature sensing data, respectively. Here, the three UEs may be divided into a same UE group. In this way, when the network device uses the first type of paging message for paging, responses of the three UEs may be kept consistent to realize data collaboration.

Services of the UEs in the same UE group may also be multiple services requiring data coordination.

The UE group may be divided according to the geographic location.

Here, the UE group may be divided according to a geographic location type of the UE. Here, geographic locations of the UEs in the same UE group may be the same or different. The geographic locations of the UEs in the same UE group may be selected according to needs of a data collaboration task.

Illustratively, in a certain data collaboration task, service data collected by n different UEs needs to be coordinated, so as to obtain service data statistics in a larger range. In this way, it is preferable that the *n* UEs are evenly distributed in the range. Therefore, the *n* UEs evenly distributed in the range may be selected to form a UE group. In this way, when the network device uses the first type of paging message for paging, responses of the n UEs may be kept consistent, and data collaboration may be realized.

In an embodiment, paging configurations of first types of paging messages for different UE groups are different.

The paging configuration may include a transmission resource, and/or a paging coding mode, and/or a group paging identifier, etc.

The UEs in the different UE groups receive their respective first types of paging messages by using paging configurations corresponding to their respective UE groups, thus reducing a situation that the UEs mistakenly receive first types of paging messages for other UE groups due to same paging configurations of the first types of paging message for the different UE groups, and further reducing a situation of being paged by mistake.

In an embodiment, monitoring occasions of the first types of paging messages for the different UE groups are different, and/or paging radio network temporary identifiers (P-PRNTIs) of the first types of paging messages for the different UE groups are different, and/or control resource sets (CORESETs) of the first types of paging messages for the different UE groups are different, and/or search spaces of the first types of paging messages for the different UE groups are different, and/or group paging identifiers carried in the first types of paging messages for the different UE groups are different.

The paging configuration may include the monitoring occasion, the P-PRNTI, the CORESET, the search space and/or the group paging identifier, etc.

The paging configurations of the first types of paging messages for the different UE groups are different, that is, paging configurations of first types of paging messages corresponding to different group paging identifiers are different. The UE may determine the first type of paging message that needs to be monitored and received according to the group paging identifier of the UE group to which the UE belongs.

Illustratively, the UE may monitor based on the monitoring occasion of the first type of paging message corresponding to the group paging identifier of the UE group to which the UE belongs.

The network may configure a monitoring occasion bound to the group paging identifier, and the first type of paging message does not need to carry identifier information associated with a corresponding UE group. The UE may merely need to monitor at a monitoring occasion corresponding to the UE group to which the UE belongs.

The first type of paging message may be scrambled by using the P-PRNTI. When the UE receives the paging message, in case that a blind detection of the first type of paging message scrambled by the P-RNTI succeeds, it may determine that the first type of paging message is sent to itself.

The network may configure a P-RNTI bound to the UE group, that is, the group paging identifier. The UE in the same UE group may perform a blind detection based on a P-RNTI corresponding to the UE group to which the UE belongs, so that the first type of paging message for the UE group to which the UE belongs may be received. That is, the UE may merely monitor the first type of paging message corresponding to the P-RNTI bound to its own UE group.

The CORESET is a set of transmission resources configured to transmit the first type of paging message, including a frequency domain resource and/or a time domain resource. The different first types of paging messages may use different CORESETs.

The network may configure a CORESET bound to the group paging identifier, and the UE monitors the first type of paging message based on the CORESET provided by the network. In this way, the first type of paging message does not need to carry the identifier information related to the UE group, and the UE merely needs to monitor in a CORESET corresponding to its own UE group.

The search space may define a starting position for blindly detecting the first type of paging message and a channel search mode, and the different first types of paging messages may have different search spaces.

The network may configure a search space bound to the group paging identifier, and the UE monitors the first type of paging message based on the search space provided by the network. In this way, the first type of paging message does not need to carry the identifier information related to the UE group, and the UE merely needs to monitor in a search space corresponding to its own UE group.

The network may also set the group paging identifier of the UE group in the first type of paging message for the UE group. In this way, the UE may determine whether a received first type of paging message is sent to itself according to the group paging identifier in the first type of paging message.

In an embodiment, the network selects one or more items from the above-mentioned monitoring occasion, the monitoring occasion, the P-PRNTI, the CORESET, the search space, and the group paging identifier to distinguish the different first types of paging messages. For example, the network may configure the different first types of paging messages, and the monitoring occasion, the monitoring occasion, the P-PRNTI, the CORESET, the search space, and the group paging identifier are all different.

In some embodiments, as shown in FIG. 3b, a paging method provided in an embodiment of the present disclosure includes a step as follows.

In step 302, a second type of paging message for the UE is received.

Step 302 may be implemented alone, or may be implemented in combination with step 301.

In addition to sending the first type of paging message, the network device may also send the second type of paging message for paging a single UE.

The first type of paging message may be configured to page the UE group, and the second type of paging message may be configured to page a single UE.

In this way, the base station may send two types of paging messages, and the UE may receive the two types of paging messages, thus improving the compatibility of transmitting paging messages between the base station and the UE.

In an embodiment, a paging configuration of the first type of paging message is different from a paging configuration of the second type of paging message.

The first type of paging message and the second type of paging message may have different paging configurations. Here, the paging configuration may include a transmission resource and/or have different coding modes and the like.

Based on the group paging identifier provided by the network, the UE may also monitor the second type of paging message, while monitoring the first type of paging message at a paging occasion (PO) corresponding to the group paging identifier.

Illustratively, the UE may continue to monitor the second type of paging message outside the monitoring occasion of the first type of paging message. In case that the monitoring occasion of the first type of paging message overlaps with the monitoring occasion of the second type of paging message, the UE may simultaneously decode the two types of paging messages.

For example, in a certain data collaboration task, data collected by three different UEs needs to be coordinated. Here, the three UEs may be divided into a same UE group. In this way, when the network device uses the first type of paging message for paging, responses of the three UEs may be kept consistent. The network device may also use the second type of paging message to page one or more of the three UEs, so as to maintain the normal development of other communication services other than the data collaboration task.

In this way, the base station may send the two types of paging messages, and the UE may receive the two types of paging messages, thus improving the compatibility of transmitting paging messages between the base station and the UE.

In an embodiment, a monitoring occasion of the first type of paging message is different from a monitoring occasion of the second type of paging message, and/or a P-PRNTI of the first type of paging message is different from a P-PRNTI of the second type of paging message, and/or a CORESET of the first type of paging message is different from a CORESET of the second type of paging message, and/or a search space of the first type of paging message is different from a search space of the second type of paging message.

The first type of paging message and the second type of paging message may have different paging configurations. Here, the paging configuration may include a transmission resource and/or have different coding modes and the like.

Illustratively, the monitoring occasion of the first type of paging message is different from the monitoring occasion of the second type of paging message. The network device may respectively send the first type of paging message and the second type of paging message at different monitoring occasions, and the UE may respectively receive the first type of paging message and the second type of paging message at different monitoring occasions. In this way, the complexity of receiving paging messages caused by overlapping monitoring occasions of the two types of paging messages is reduced.

The network device may use different P-PRNTIs to scramble the first type of paging message and the second type paging message. When receiving the paging message, the UE may blindly detect paging messages by using the P-PRNTI corresponding to the first type of paging message and the second type of paging message, respectively, and then receive the first type of paging message or the second type of paging message sent to itself.

The network device may use different CORESETs to transmit the first type of paging message and the second type of paging message. When receiving a paging message, the UE may receive the paging message by using the CORESET corresponding to the first type of paging message and the second type of paging message, respectively, and then receive the first type of paging message or the second type of paging message sent to itself.

The network device may use different search spaces to transmit the first type of paging message and the second type of paging message. When receiving the paging message, the UE may use the search space corresponding to the first type of paging message and the second type of paging message respectively to perform monitoring, and then receive the first type of paging message or the second type of paging message sent to itself.

In an embodiment, the network selects one or more items from the above-mentioned monitoring occasion, the monitoring occasion, the P-PRNTI, the CORESET, the search space, and the group paging identifier to distinguish between different first types of paging messages and second types of paging messages. For example, the network may configure the first type of paging message and the second type of paging message, and the monitoring occasion, the monitoring occasion, the P-PRNTI, the CORESET, and the search space of the first type of paging message are different from those of the second type of paging message.

In some embodiments, as shown in FIG. 3c, a paging method provided in an embodiment of the present disclosure includes a step as follows.

In step 303, a monitoring indication is received, and the first type of paging message and/or the second type of paging message are/is monitored based on the monitoring indication.

Step 303 may be implemented alone, or may be implemented in combination with step 301 and/or step 302.

The UE may monitor the first type of paging message and/or the second type of paging message based on an indication of a network monitoring indication or a stipulation of a communication protocol.

Illustratively, the UE may monitor the first type of paging message and/or the second type of paging message at the same time based on the indication of the network monitoring indication or the stipulation of the communication protocol.

The UE may merely monitor the first type of paging message or the second type of paging message based on the indication of the network monitoring indication or the stipulation of the communication protocol.

In an embodiment, the base station may send the monitoring indication carrying in a broadcast message such as a system message to the UE. For example, the monitoring indication may be carried in the broadcast message such as the system message, and sent it to the UE, indicating the UE to notify monitoring of the first type of paging message.

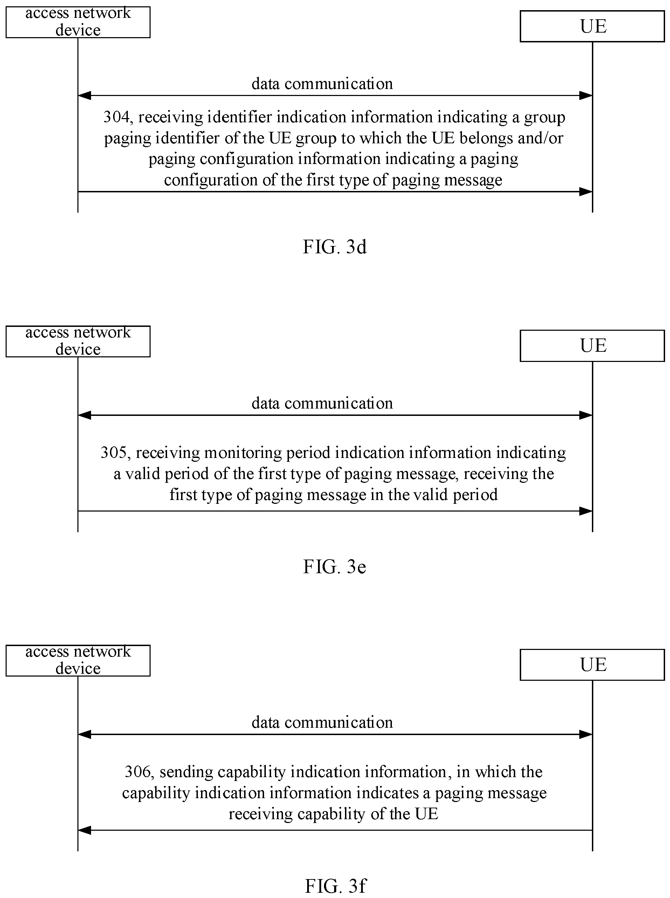

In some embodiments, as shown in FIG. 3d, a paging method provided in an embodiment of the present disclosure includes a step as follows.

In step 304, identifier indication information indicating a group paging identifier of the UE group to which the UE belongs and/or paging configuration information indicating a paging configuration of the first type of paging message are/is received.

Step 304 may be implemented alone, or may be implemented in combination with step 301, step 302 and/or step 303.

Here, the UEs may be grouped by the core network or the access network device. The access network device determines the paging configuration information of the first type of paging message for each UE group. The paging configuration information is configured to indicate the paging configuration of the first type of paging message, such as a transmission resource, and/or having different coding modes, and/or having different group paging identifiers.

The core network or the access network device may send the indication information of the group paging identifier of the UE group indicated by the UE to the UE. In this way, the UE may determine the group paging identifier according to the indication information of the group paging identifier, and then determine the UE group to which the UE belongs according to the group paging identifier.

The access network device may send the paging configuration information to the UE. The paging configuration information may indicate the paging configuration of the first type of paging message for the UE group to which the UE belongs, and may also indicate the paging configurations of the first types of paging messages of all UE groups. In this way, the UE may receive the first type of paging message according to the group paging identifier and the paging configuration.

The identifier indication information and the paging configuration information provided by the network may be sent to the UE via a public signaling or a dedicated signaling.

In an embodiment, in response to the UE receiving the identifier indication information indicating the group paging identifier, at least the first type of paging message is received.

In case that the network device allocates the group paging identifier to the UE, it means that the UE needs to monitor at least the first type of paging message.

In an embodiment, receiving the identifier indication information indicating the group paging identifier of the UE group to which the UE belongs and/or the paging configuration information indicating the paging configuration of the first type of paging message includes at least one of receiving access stratum (AS) information carrying the identifier indication information and/or the paging configuration information, or receiving non-access stratum (NAS) information carrying the identifier indication information.

In case that the identifier indication information and/or the paging configuration information is determined by a device at a radio access stratum, it may be directly sent to the UE by a device such as a RNC or a base station via the AS information.

In case that the identifier indication information is determined by the core network device, it may be directly sent to the UE by the core network device via the NAS information. In this way, access of a device at an access stratum is reduced, and communication efficiency is improved. The core network may determine the identifier indication information, and the base station forwards the identifier indication information to the UE.

In an embodiment, the AS information includes a system message, and a radio resource control (RRC) signaling.

In an embodiment, the base station sends the system message carrying the identifier indication information and/or the paging configuration information, and the UE parses the identifier indication information and/or the paging configuration information from the system message.

Alternatively, the base station sends the RRC signaling carrying the identifier indication information and/or the paging configuration information, and the UE parses the identifier indication information and/or the paging configuration information from the RRC signaling. Since the UE receives the RRC signaling when it is in a RRC connected state, the identifier indication information and the paging configuration information may respectively indicate a group paging identifier and a paging configuration of the UE in a RRC disconnected state. Here, the RRC disconnected state includes a RRC idle state and/or a RRC inactive state.

Illustratively, the access network device such as the base station may send the AS information carrying the identifier indication information and/or the paging configuration information. It indicates the group paging identifier of the UE group to which the UE belongs, and the paging configuration of the first type of paging message. Here, the AS information may be the RRC signaling, such as a RRC release signaling. After receiving the identifier indication information and/or the paging configuration information, the UE monitors the first type of paging message based on an allocated group paging identifier and the paging configuration of the first type of paging message.

In an embodiment, the NAS information includes downlink information in a UE attachment process.

Here, the core network and the like may carry the identifier indication information and/or the paging configuration information in the downlink information in the UE attachment process. A non-access stratum (NAS) of the UE may notify an access stratum (AS) of the identifier indication information and/or the paging configuration information through an inter-layer message, and then the first type of paging message is monitored.

Illustratively, the core network may send the identifier indication information, that is, the core network notifies the UE of its group paging identifier in an attach message.

In an embodiment, the paging message issued by the core network to the base station carries the paging identifier of the UE group.

In an embodiment, the paging message issued by the core network to the base station carries the indication information of the group paging identifier, indicating that this is a group paging.

In an embodiment, the base station decides that this is a group paging, and sends the first type of paging message in the paging configuration of the group paging identifier.

In an embodiment, in case that the UE is in an idle state, an upper stratum will be notified after receiving the first type of paging message.

In some embodiments, as shown in FIG. 3e, a paging method provided in an embodiment of the present disclosure includes a step as follows.

In step 305, monitoring period indication information indicating a valid period of the first type of paging message is received. Receiving the first type of paging message for the UE group to which the UE belongs includes receiving the first type of paging message in the valid period. Step 305 may be implemented alone, or may be implemented in combination with step 301, step 302, step 303 and/or step 304.

In an embodiment, the method also includes a network side may notify the UE that it may monitor and receive the first type of paging message within the valid period. Outside the valid period, the UE may not monitor the first type of paging message, and merely monitor the second type of paging message.

In an embodiment, the UE may monitor and receive the first type of paging message and the second type of paging message within the valid period.

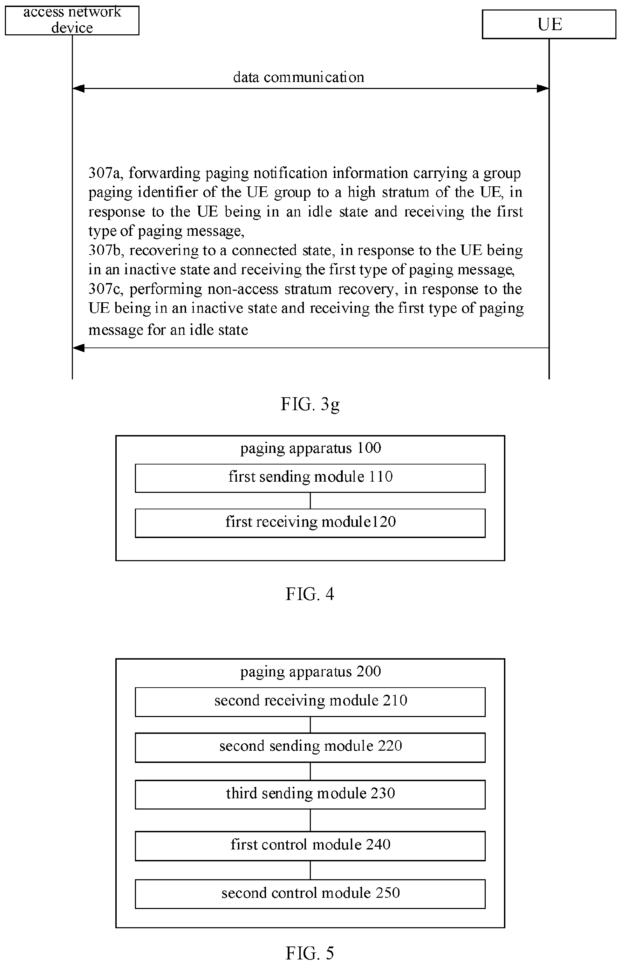

In some embodiments, as shown in FIG. 3g, a paging method provided in an embodiment of the present disclosure includes a step as follows.

In step 306, capability indication information is sent. The capability indication information indicates a paging message receiving capability of the UE.

Step 306 may be implemented alone, or may be implemented in combination with step 301, step 302, step 303, step 304 and/or step 305.

Illustratively, in case that the UE has a capability to monitor and receive the first type of paging message and the second type of paging message at the same time, the network device may send the first type of paging message and the second type of paging message, or may merely send one of the first type of paging message and the second type of paging message.

In case that the UE merely has a capability to monitor and receive one of the first type of paging message and second type of paging message at the same time, the network device may merely send one of the first type of paging message and second type of paging message.

Here, the capability of the UE to monitor and receive the first type of paging message may be a capability of monitoring and receiving group PDCCH DCI. The capability of the UE to monitor and receive the second type of paging message may be a capability to receive other PDCCH DCI.

The UE may indicate a capability of the UE to receive the paging message to the network side.

Illustratively, the UE may indicate the capability of the UE to receive the paging message by sending the capability indication information to the network device.

For example, the UE may carry a UE capability indication information in the capability information and report it to the base station. This information may be forwarded by the base station to the core network.

In some embodiments, as shown in FIG. 3f, a paging method provided in an embodiment of the present disclosure includes at least one step as follows.

In step 307a, paging notification information carrying a group paging identifier of the UE group is forwarded to a high stratum of the UE, in response to the UE being in an idle state and receiving the first type of paging message.

In step 307b, it is recovered to a connected state, in response to the UE being in an inactive state and receiving the first type of paging message.

In step 307c, non-access stratum recovery is performed, in response to the UE being in an inactive state and receiving the first type of paging message for an idle state.

Step 307a, step 307b and/or step 307c may be implemented alone, or may be implemented in combination with step 301, step 302, step 303, step 304, step 305 and/or step 306.

For receiving the first type of paging message, the UE in the idle state may carry the UE group information when sending the paging notification information to the NAS. Here, the UE group information may include the group paging identifier. The high stratum may determine that the paging message for the UE group is received. Here, the first type of paging message may be initiated by the base station for a user in an idle state.

For receiving the first type of paging message, the UE in the inactive state may be recovered to the connected state.

In case that the UE in the inactive state receives the first type of paging message for a group in an idle state, a response mode of the UE in the inactive state may include performing the NAS recovery.

A specific example is provided below in combination with any one of the above-mentioned embodiments.
1. Paging coordination is added for a newly added application scenario in a network that need group synchronization.
   a) In an example, users needing the group synchronization are multimodal output terminals.
   b) The application scenario is in an idle state/an inactive state/a connected state.

In a preferred example, the network performs group coordinated paging for a user in an idle state.

In a preferred example, the network performs group coordinated paging for a user in an inactive state.

2. Based on 1, the terminal monitors a group paging message based on a group paging identifier provided by the network.
a) In an example, the group paging identifier may be grouped according to services.
   In an example, since a core network is more aware of service characteristics, the core network groups the terminals according to the service characteristics.
b) In an example, the group paging identifier may be grouped according to geographic locations.

In an example, since a base station is more aware of a location of the terminal, the base station groups the terminals according to geographic locations of the terminals.

3. Based on 2, the terminal decodes and receives the group paging message based on the group paging identifier provided by the network. That is, different UE groups are distinguished via different time-frequency codes.
a) In an embodiment, the terminal monitors based on a specific monitoring moment provided by the network and bound to the group paging identifier.

Further, the network may provide a one-to-one correspondence of the specific monitoring moment bound to the group paging identifier, and then the paging message will not carry UE group information at this time.

Further, the network may provide that the specific monitoring moment bound to the group paging identifier is different from a monitoring moment of legacy monitoring.

b) In an embodiment, the terminal monitors based on a specific PRNTI provided by the network and bound to the group paging identifier.

Further, the network may provide a one-to-one correspondence of the specific PRNTI bound to the group paging identifier, and then the paging message will not carry UE group information at this time. For example, the terminal merely needs to monitor the specific PRNTI corresponding to its own UE group.

Further, the network may provide that the specific PRNTI bound to the group paging identifier is different from a monitored PRNTI of legacy monitoring.

c) In an embodiment, the terminal monitors based on a specific CORESET provided by the network and bound to the group paging identifier.

Further, the network may provide a one-to-one correspondence of the specific CORESET bound to the group paging identifier, and then the paging message will not carry UE group information at this time. The terminal merely needs to monitor the specific CORESET corresponding to its own UE group.

Further, the network may provide that the specific CORESET bound to the group paging identifier is different from a CORESET of legacy monitoring.

d) In an embodiment, the terminal monitors based on a specific search space provided by the network and bound to the group paging identifier.

Further, the network may provide a one-to-one correspondence of specific search space bound to the group paging identifier, and then the paging message will not carry UE group information at this time. The terminal merely needs to monitor the specific search space corresponding to its own UE group.

Further, the network may provide that the specific search space bound to the group paging identifier is different from a search space of legacy monitoring.

e) In an embodiment, the terminal monitors based on the group paging identifier provided by the network.

Further, in case that the network does not provide different time-frequency codes in abed to distinguish different UE groups, a group ID may be provided in the paging message for distinction.

In an embodiment, an indication is provided in the paging message, indicating that this is a group type paging.

4. Based on 2, based on the group paging identifier provided by the network, the terminal also monitors a legacy paging message, while needs to monitor at a paging occasion (PO) bound to the group paging identifier.
a) In an embodiment, in case that the group paging provided by the network is monitored at a specific monitoring moment, the terminal may continue to monitor legacy paging in addition to monitoring group paging. That is, it needs to monitor at two monitoring moments.
b) In an embodiment, in case that the specific monitoring moment of the group paging provided by the network overlaps with a legacy monitoring moment, the terminal may decode two paging messages at the same time.

5. Based on 2, the terminal may perform a monitoring behavior based on a network notification or a protocol pre-agreement.
a) In an embodiment, two types of paging messages are monitored based on the network notification or the protocol pre-agreement.
b) In an example, the network allocates a group paging identifier to the terminal, which means that the terminal needs to perform at least group paging message monitoring.
c) In an embodiment, merely group paging message monitoring is performed based on the network notification or the protocol pre-agreement.

For example, the base station sends a broadcast message to notify a terminal having a capability of monitoring group paging to start a group paging monitoring function.

6. Based on 2, the terminal processes to receive the group paging message monitoring.
a) For receiving the group paging message, the user in an idle state will notify a high stratum, which may carry group information.
b) For receiving the group paging message, the inactive state will perform a resume process.
c) For receiving a group paging message in an idle state, the inactive state will perform NAS recovery.

7. In an embodiment, the group paging identifier and a group paging configuration provided by the network may be notified to a user in advance via a public signaling or a dedicated signaling.
a) In an embodiment, the information may be notified to the terminal at an AS, and one possibility is to notify the user via a system message.
b) In an embodiment, the information may be notified to the terminal at an AS, and one possibility is to notify the user via a RRC connection release message, and additional validation conditions may also be added.

For example, a UE group paging identifier in an inactive state is allocated to a user in an active state.

Illustratively, at this time, the network is an access network element, such as a base station.

In an embodiment, the base station performs group paging on UE1 and UE2, that is, the base station notifies the UE1 and the UE2 in a release message that the group paging identifier is group1. The terminal is notified of a paging configuration of the group1.

In an embodiment, the UE1, and the UE2 monitor the group paging information in the paging configuration of the group1.

In an embodiment, the paging message issued by the base station carries the paging identifier of the UE group, that is, the group!.

In an example, in case that the UE1 and the UE2 are in an inactive state, a resume request will be sent to the network.

Further, a user is notified of a valid period of needing to monitor the UE group of the paging system. That is, the user may merely perform legacy paging outside the valid period.

c) In an example, the information may be notified to the terminal at a NAS, and one possibility is that an attachment process of the UE notifies the user.

Further, the NAS of the terminal may notify the AS of information about the UE group to which the UE belongs to monitor the paging message via an inter-layer message.

Illustratively, at this time, the network is a core network element.

In an embodiment, the core network performs group paging on UE1 and UE2, that is, the core network notifies the UE1 and the UE2 in an attach message that the group paging identifier is group 1.

In an embodiment, the paging message issued by the core network to the base station carries the paging identifier of the UE group, that is, the group1.

In an embodiment, the paging message issued by the core network to the base station carries information, which indicates that this is a group paging.

In an embodiment, the base station determines that this is a group paging, and monitors the group paging information in a paging configuration of the group1.

In an example, in case that the UE1 and the UE2 are in an idle state, the high stratum will be notified after receiving the paging message.

8. Based on 2, the terminal will report to the network whether it has a capability of group scheduling.
a) A terminal capability is introduced. That is, whether it supports decoding group PDCCH DCI. That is, whether a group paging function is supported.
b) A terminal capability is introduced, that is, whether to support a capability of decoding group PDCCH DCI and other scheduled PDC DCI at the same time.
c) The terminal reports to the base station through existing UE capability information.
d) The information may be forwarded to the core network by the base station when releasing the UE.

An embodiment of the present invention also provides a paging apparatus. The apparatus may be applied to a network device of a wireless communication. As shown in FIG. 4, the paging apparatus 100 includes a first sending module 110 configured to send a first type of paging message for a user equipment (UE) group. The UE group includes at least one UE.

In an embodiment, the UE included in the UE group is a multimodality UE.

In an embodiment, the first type of paging message includes a first type of paging message for a UE in an idle state, and/or a first type of paging message for a UE in an inactive state.

In an embodiment, the first type of paging message for the UE group includes a first type of paging message for a group paging identifier of the UE group.

In an embodiment, the UE group is determined according to a service of the UE, and/or the UE group is determined according to a geographic location of the UE.

In an embodiment, paging configurations of first types of paging messages for different UE groups are different.

In an embodiment, monitoring occasions of the first types of paging messages for the different UE groups are different, and/or paging radio network temporary identifiers (P-PRNTIs) of the first types of paging messages for the different UE groups are different, and/or control resource sets (CORESETs) of the first types of paging messages for the different UE groups are different, and/or search spaces of the first types of paging messages for the different UE groups are different, and/or group paging identifiers carried in the first types of paging messages for the different UE groups are different.

In an embodiment, the first sending module 110 is further configured to send a second type of paging message for the UE.

In an embodiment, a paging configuration of the first type of paging message is different from a paging configuration of the second type of paging message.

In an embodiment, a monitoring occasion of the first type of paging message is different from a monitoring occasion of the second type of paging message, and/or a P-PRNTI of the first type of paging message is different from a P-PRNTI of the second type of paging message, and/or a CORESET of the first type of paging message is different from a CORESET of the second type of paging message, and/or a search space of the first type of paging message is different from a search space of the second type of paging message.

In an embodiment, the first sending module 110 is further configured to send a monitoring indication to the UE. The monitoring indication indicates the UE to monitor the first type of paging message and/or the second type of paging message.

In an embodiment, the first sending module 110 is further configured to send identifier indication information indicating a group paging identifier of the UE group to which the UE belongs, and/or send paging configuration information indicating a paging configuration of the first type of paging message by an access network device in the network device.

In an embodiment, the first sending module 110 is specifically configured to at least one of sending access stratum (AS) information carrying the identifier indication information, or sending non-access stratum (NAS) information carrying the identifier indication information, or sending AS information carrying the paging configuration information by the access network device.

In an embodiment, the AS information includes a system message, and a radio resource control (RRC) signaling.

In an embodiment, the NAS information includes downlink information in a UE attachment process.

In an embodiment, the first sending module 110 is further configured to send monitoring period indication information indicating a valid period of the first type of paging message.

In an embodiment, the first sending module 110 is further configured to send the first type of paging message and/or the second type of paging message to the UE based on a paging message receiving capability of the UE.

In an embodiment, the apparatus 100 further includes a first receiving module 120 configured to receive capability indication information sent by the UE. The capability indication information indicates the paging message receiving capability of the UE.

An embodiment of the present invention also provides a paging apparatus. The paging apparatus may be applied to a user equipment (UE) of a wireless communication. As shown in FIG. 5, the paging apparatus 200 includes a second receiving module 210 configured to receive a first type of paging message for a user equipment (UE) group to which a UE belongs. The UE group includes at least one UE.

In an embodiment, the UE is a multimodality UE.

In an embodiment, the UE is in an idle state or an active state.

In an embodiment, receiving the first type of paging message for the UE group to which the UE belongs includes receiving the first type of paging message for a group paging identifier of the UE group.

In an embodiment, the UE group is determined according to a service of the UE, and/or the UE group is determined according to a geographic location of the UE.

In an embodiment, paging configurations of first types of paging messages for different UE groups are different.

In an embodiment, monitoring occasions of the first types of paging messages for the different UE groups are different, and/or paging radio network temporary identifiers (P-PRNTIs) of the first types of paging messages for the different UE groups are different, and/or control resource sets (CORESETs) of the first types of paging messages for the different UE groups are different, and/or search spaces of the first types of paging messages for the different UE groups are different, and/or group paging identifiers carried in the first types of paging messages for the different UE groups are different.

In an embodiment, the second receiving module 210 is further configured to receive a second type of paging message for the UE.

In an embodiment, a paging configuration of the first type of paging message is different from a paging configuration of the second type of paging message.

In an embodiment, a monitoring occasion of the first type of paging message is different from a monitoring occasion of the second type of paging message, and/or a P-PRNTI of the first type of paging message is different from a P-PRNTI of the second type of paging message, and/or a CORESET of the first type of paging message is different from a CORESET of the second type of paging message, and/or a search space of the first type of paging message is different from a search space of the second type of paging message.

In an embodiment, the second receiving module 210 is further configured to receive a monitoring indication. The second receiving module 210 is further configured to monitor the first type of paging message and/or the second type of paging message based on the monitoring indication.

In an embodiment, the second receiving module 210 is further configured to receive identifier indication information indicating a group paging identifier of the UE group to which the UE belongs and/or paging configuration information indicating a paging configuration of the first type of paging message.

In an embodiment, the second receiving module 210 is specifically configured to at least one of receiving access stratum (AS) information carrying the identifier indication information and/or the paging configuration information, or receiving non-access stratum (NAS) information carrying the identifier indication information.

In an embodiment, the AS information includes a system message, and a radio resource control (RRC) signaling.

In an embodiment, the NAS information includes downlink information in a UE attachment process.

In an embodiment, the second receiving module 210 is further configured to receive monitoring period indication information indicating a valid period of the first type of paging message. The second receiving module 210 is further configured to receive the first type of paging message in the valid period.

In an embodiment, the apparatus 200 further includes a second sending module 220. The second sending module 220 is further configured to send capability indication information. The capability indication information indicates a paging message receiving capability of the UE.

In an embodiment, the apparatus 200 further includes at least one of a third sending module 230 configured to forward paging notification information carrying a group paging identifier of the UE group to a high stratum of the UE, in response to the UE being in an idle state and receiving the first type of paging message, a first control module 240 configured to recovery to a connected state, in response to the UE being in an inactive state and receiving the first type of paging message, or a second control module 250 is configured to perform non-access stratum recovery, in response to the UE being in an inactive state and receiving the first type of paging message for an idle state.

In an illustrative embodiment, the first sending module 110, the first receiving module 120, the second receiving module 210, the second sending module 220, the third sending module 230, the first control module 240, the second control module 250, and the like may be implemented by one or more of a central processing unit (CPU), a graphics processor unit (GPU), a baseband processor (BP), an application specific integrated circuit (ASIC), a DSP, a programmable logic device (PLD), a complex programmable logic device (CPLD), a field-programmable gate array (FPGA), a general processor, a controller, a micro controller unit (MCU), a microprocessor, or other electronic elements, for performing the above-mentioned method.

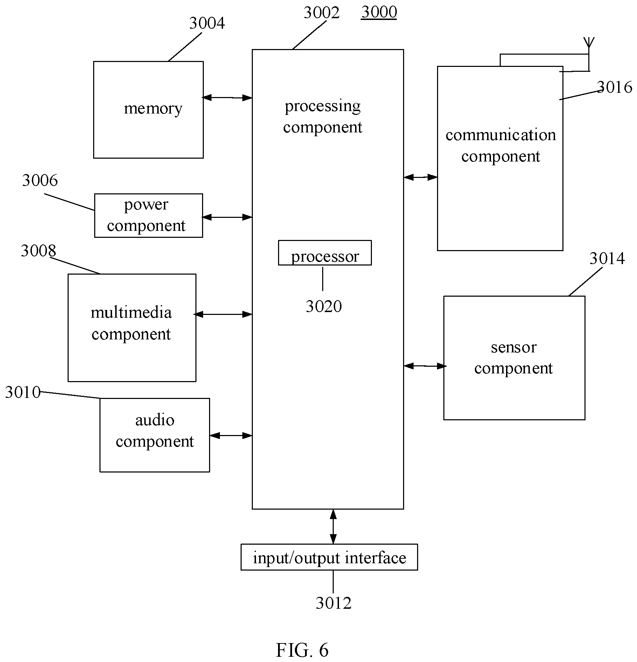

FIG. 6 is a block diagram showing a device 3000 for paging according to an illustrative embodiment. For example, the device 3000 may be a mobile phone, a computer, a digital broadcast terminal, a messaging device, a game console, a tablet device, a medical device, a fitness device, a personal digital assistant, or the like.

Referring to FIG. 6, the device 3000 may include one or more of a processing component 3002, a memory 3004, a power component 3006, a multimedia component 3008, an audio component 3010, an input/output (I/O) interface 3012, a sensor component 3014, and a communication component 3016.

The processing component 3002 typically controls overall operations of the device 3000, such as the operations associated with display, phone calls, data communications, camera operations, and recording operations. The processing component 3002 may include one or more processors 3020 to execute instructions to perform all or some of the steps in the above-described methods. Moreover, the processing component 3002 may include one or more modules which facilitate the interaction between the processing component 3002 and other components. For instance, the processing component 3002 may include a multimedia module to facilitate the interaction between the multimedia component 3008 and the processing component 3002.

The memory 3004 is configured to store various types of data to support the operation of the device 3000. Examples of such data include instructions for any applications or methods operated on the device 3000, contact data, phonebook data, messages, pictures, videos, etc. The memory 3004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 3006 provides power to various components of the device 3000. The power component 3006 may include a power management system, one or more power sources, and any other components associated with the generation, management, and distribution of power in the device 3000.

The multimedia component 3008 includes a screen providing an output interface between the device 3000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 3008 includes a front camera and/or a rear camera. The front camera and/or the rear camera may receive an external multimedia datum while the device 3000 is in an operation mode, such as a photographing mode or a video mode. Each of the front camera and the rear camera may be a fixed optical lens system or have focus and optical zoom capability.

The audio component 3010 is configured to output and/or input audio signals. For example, the audio component 3010 includes a microphone (MIC) configured to receive an external audio signal when the device 3000 is in an operation mode, such as a call mode, a recording mode, and a voice recognition mode. The received audio signal may be further stored in the memory 3004 or transmitted via the communication component 3016. In some embodiments, the audio component 3010 further includes a speaker to output audio signals.

The I/O interface 3012 provides an interface between the processing component 3002 and peripheral interface modules, such as keyboards, click wheels, buttons, and the like. The buttons may include, but are not limited to, a home button, a volume button, a starting button, and a locking button.

The sensor component 3014 includes one or more sensors to provide status assessments of various aspects of the device 3000. For instance, the sensor component 3014 may detect an open/closed status of the device 3000, relative positioning of components, e.g., the display and the keypad, of the device 3000, a change in position of the device 3000 or a component of the device 3000, a presence or absence of user contact with the device 3000, an orientation or an acceleration/deceleration of the device 3000, and a change in temperature of the device 3000. The sensor component 3014 may include a proximity sensor configured to detect the presence of nearby objects without any physical contact. The sensor component 3014 may further include a light sensor, such as a CMOS or CCD image sensor, for use in imaging applications. In some embodiments, the sensor component 3014 may further include an accelerometer sensor, a gyroscope sensor, a magnetic sensor, a pressure sensor, or a temperature sensor.

The communication component 3016 is configured to facilitate communication, wired or wireless, between the device 3000 and other devices. The device 3000 may access a wireless network based on a communication standard, such as Wi-Fi, 2G, or 3G, or a combination thereof. In an illustrative embodiment, the communication component 3016 receives a broadcast signal or broadcast associated information from an external broadcast management system via a broadcast channel. In an illustrative embodiment, the communication component 3016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the device 3000 may be implemented with one or more of an application specific integrated circuit (ASIC), a digital signal processor (DSP), a digital signal processing device (DSPD), a programmable logic device (PLD), a field programmable gate array (FPGA), a controller, a micro-controller, a microprocessor, or other electronic elements, for performing the above-mentioned methods.

In an illustrative embodiment, there is also provided a non-transitory computer readable storage medium including instructions, such as included in the memory 3004, executable by the processor 3020 in the device 3000, for completing the above-mentioned methods. For example, the non-transitory computer-readable storage medium may be a ROM, a random access memory (RAM), a CD-ROM, a magnetic tape, a floppy disc, an optical data storage device, and the like.

Other embodiments of the disclosure will be apparent to those skilled in the art from consideration of the specification and practice of the disclosure disclosed here. The present disclosure is intended to cover any variations, uses, or adaptations of the embodiments of the present disclosure following the general principles of the embodiments of the present disclosure and including such departures from the present disclosure as come within known or customary practice in the art. It is intended that the specification and examples be considered as illustrative only, with a true scope and spirit of the embodiments of the present disclosure being indicated by the following claims.

It will be appreciated that the embodiments of the present disclosure is not limited to the exact construction that has been described above and illustrated in the accompanying drawings, and that various modifications and changes may be made without departing from the scope thereof. It is intended that the scope of the embodiments of the present disclosure only be limited by the appended claims.

## Claims

1. A paging method, performed by a network device, comprising:
sending a first type of paging message for a user equipment (UE) group, wherein the UE group comprises at least one UE.

2. The method of claim 1, wherein the UE comprised in the UE group is a multimodality UE.

3. The method of claim 1, wherein the first type of paging message comprises:
a first type of paging message for a UE in an idle state; and/or
a first type of paging message for a UE in an inactive state.

4. The method of claim 1, wherein the first type of paging message for the UE group comprises a first type of paging message for a group paging identifier of the UE group.

5. The method of claim 1, wherein
the UE group is determined according to a service of the UE; and/or
the UE group is determined according to a geographic location of the UE.

6. The method of claim 1, wherein paging configurations of first types of paging messages for different UE groups are different.

7. The method of claim 6, wherein
monitoring occasions of the first types of paging messages for the different UE groups are different; and/or
paging radio network temporary identifiers (P-PRNTIs) of the first types of paging messages for the different UE groups are different; and/or
control resource sets (CORESETs) of the first types of paging messages for the different UE groups are different; and/or
search spaces of the first types of paging messages for the different UE groups are different; and/or
group paging identifiers carried in the first types of paging messages for the different UE groups are different.

8. The method of claim 1, further comprising:
sending a second type of paging message for the UE.

9. The method of claim 8, wherein a paging configuration of the first type of paging message is different from a paging configuration of the second type of paging message.

10. The method of claim 9, wherein
a monitoring occasion of the first type of paging message is different from a monitoring occasion of the second type of paging message; and/or
a P-PRNTI of the first type of paging message is different from a P-PRNTI of the second type of paging message; and/or
a CORESET of the first type of paging message is different from a CORESET of the second type of paging message; and/or
a search space of the first type of paging message is different from a search space of the second type of paging message.

11. The method of claim 8, further comprising:
sending a monitoring indication to the UE, wherein the monitoring indication indicates the UE to monitor the first type of paging message and/or the second type of paging message.

12. The method of any one of claims 1 to 11, further comprising:
sending identifier indication information indicating a group paging identifier of the UE group to which the UE belongs; and/or
sending paging configuration information indicating a paging configuration of the first type of paging message by an access network device in the network device.

13. The method of claim 12, wherein sending the identifier indication information indicating the group paging identifier of the UE group to which the UE belongs comprises at least one of:
sending access stratum (AS) information carrying the identifier indication information; or
sending non-access stratum (NAS) information carrying the identifier indication information;
sending the paging configuration information indicating the paging configuration of the first type of paging message by the access network device in the network device comprises:
sending AS information carrying the paging configuration information by the access network device.

14. The method of claim 13, wherein the AS information comprises:
a system message; and
a radio resource control (RRC) signaling.

15. The method of claim 13, wherein the NAS information comprises:
downlink information in a UE attachment process.

16. The method of any one of claims 1 to 11, further comprising:
sending monitoring period indication information indicating a valid period of the first type of paging message.

17. The method of any one of claims 1 to 11, further comprising:
sending the first type of paging message and/or the second type of paging message to the UE based on a paging message receiving capability of the UE.

18. The method of claim 17, further comprising:
receiving capability indication information sent by the UE, wherein the capability indication information indicates the paging message receiving capability of the UE.

19. A paging method, performed by a user equipment (UE), comprising:
receiving a first type of paging message for a UE group to which the UE belongs, wherein the UE group comprises at least one UE.

20. The method of claim 19, wherein the UE is a multimodality UE.

21. The method of claim 19, wherein the UE is in an idle state or an active state.

22. The method of claim 19, wherein receiving the first type of paging message for the UE group to which the UE belongs comprises:
receiving the first type of paging message for a group paging identifier of the UE group.

23. The method of claim 19, wherein
the UE group is determined according to a service of the UE; and/or
the UE group is determined according to a geographic location of the UE.

24. The method of claim 19, wherein paging configurations of first types of paging messages for different UE groups are different.

25. The method of claim 24, wherein
monitoring occasions of the first types of paging messages for the different UE groups are different; and/or
paging radio network temporary identifiers (P-PRNTIs) of the first types of paging messages for the different UE groups are different; and/or
control resource sets (CORESETs) of the first types of paging messages for the different UE groups are different; and/or
search spaces of the first types of paging messages for the different UE groups are different; and/or
group paging identifiers carried in the first types of paging messages for the different UE groups are different.

26. The method of claim 19, further comprising:
receiving a second type of paging message for the UE.

27. The method of claim 26, wherein a paging configuration of the first type of paging message is different from a paging configuration of the second type of paging message.

28. The method of claim 27, wherein
a monitoring occasion of the first type of paging message is different from a monitoring occasion of the second type of paging message; and/or
a P-PRNTI of the first type of paging message is different from a P-PRNTI of the second type of paging message; and/or
a CORESET of the first type of paging message is different from a CORESET of the second type of paging message; and/or
a search space of the first type of paging message is different from a search space of the second type of paging message.

29. The method of claim 26, further comprising:
receiving a monitoring indication; and
monitoring the first type of paging message and/or the second type of paging message based on the monitoring indication.

30. The method of any one of claims 19 to 29, further comprising:
receiving identifier indication information indicating a group paging identifier of the UE group to which the UE belongs and/or paging configuration information indicating a paging configuration of the first type of paging message.

31. The method of claim 30, wherein receiving the identifier indication information indicating the group paging identifier of the UE group to which the UE belongs and/or the paging configuration information indicating the paging configuration of the first type of paging message comprises at least one of:
receiving access stratum (AS) information carrying the identifier indication information and/or the paging configuration information; or
receiving non-access stratum (NAS) information carrying the identifier indication information.

32. The method of claim 31, wherein the AS information comprises:
a system message; and
a radio resource control (RRC) signaling.

33. The method of claim 31, wherein the NAS information comprises:
downlink information in a UE attachment process.

34. The method of any one of claims 19 to 29, further comprising:
receiving monitoring period indication information indicating a valid period of the first type of paging message;
wherein receiving the first type of paging message for the UE group to which the UE belongs comprises:
receiving the first type of paging message in the valid period.

35. The method of any one of claims 19 to 29, further comprising:
sending capability indication information, wherein the capability indication information indicates a paging message receiving capability of the UE.

36. The method of any one of claims 19 to 29, further comprising at least one of:
forwarding paging notification information carrying a group paging identifier of the UE group to a high stratum of the UE, in response to the UE being in an idle state and receiving the first type of paging message;
recovering to a connected state, in response to the UE being in an inactive state and receiving the first type of paging message; or
performing non-access stratum recovery, in response to the UE being in an inactive state and receiving the first type of paging message for an idle state.

37. A paging apparatus, comprising:
a first sending module configured to send a first type of paging message for a user equipment (UE) group, wherein the UE group comprises at least one UE.

38. A paging apparatus, comprising:
a second receiving module configured to receive a first type of paging message for a user equipment (UE) group to which a UE belongs, wherein the UE group comprises at least one UE.

39. A communication device, comprising:
a processor;
a memory; and
an executable program stored in the memory and capable of being run by the processor,
wherein the processor is configured to execute steps of the paging method of any one of claims 1 to 18, or 19 to 36 when running the executable program.

40. A storage medium having stored therein executable programs that, when executed by a processor, cause steps of the paging method of any one of claims 1 to 18, or 19 to 36 to be implemented.
